# DEMANDE DE BREVET EUROPEEN

(11) **EP 1 611 784 A1**
(43) Date de publication de la demande: **04.01.2006**
(21) Numéro de dépôt: 04015092.2
(22) Date de dépôt: 28.06.2004
(51) Int. Cl.: A01K 11/00, G09F 3/03

(54) **Lien indemontable**

(71) Demandeur: BIWI S.A., CH-2855 Glovelier (CH)
(72) Inventeur: Claudel, Philippe,, 90200 Joncheret (FR)
(74) Mandataire: Gresset, Jean

(57) **Abrégé**

Lien (10) comprenant une bande (12) en matière plastique et des organes de fermeture l'un, de type mâle (14), disposé à l'une de ses extrémités (12a), l'autre, de type femelle (16), à l'autre extrémité, munis de moyens d'enclenchement agencés pour permettre un enclenchement inamovible de l'organe mâle (14) dans l'organe femelle (16), dans lequel :
■ l'organe femelle (16) comporte un logement borgne (16c) défini par un fond (16b) et une paroi latérale (16a),
■ l'organe mâle (14) comporte un corps (14b), et
■ les moyens d'enclenchement comprennent, un premier épaulement (20a) disposé dans le logement (16c) et un deuxième épaulement (18) solidaire du corps (14b) et destiné à être engagé derrière le premier épaulement (20a) pour assurer ledit enclenchement.

Selon l'invention, ce lien comporte, en outre, un élément élastique (20) associé à au moins l'un (20a) desdits épaulements et en ce que ladite bande (12), lesdits organes (14, 16), lesdits moyens d'enclenchement et l'élément élastique (20) sont constitués d'une seule pièce formée d'un matériau homogène.

## Description

La présente invention se rapporte aux liens indémontables, comme ceux décrits, par exemple, dans le document CH 662 198 au nom de la demanderesse. Ils comprennent une bande en matière plastique et des organes de fermeture, l'un de type mâle, l'autre de type femelle, disposés chacun à l'une de ses deux extrémités. Lorsque l'organe mâle est engagé, à cran, dans l'organe femelle, il devient impossible de l'en retirer.

De tels liens sont, par exemple, utilisés pour identifier du gibier abattu, les éléments de fermeture devant garantir qu'un lien ne peut être utilisé qu'une fois, afin d'éviter toute fraude.

Dans le document mentionné ci-dessus, cet usage unique, garantissant l'inviolabilité du lien, est assuré par un implant métallique intégré dans la matière plastique par surmoulage. Cette solution est largement reconnue pour son efficacité. Son prix de revient est malheureusement élevé.

La présente invention a pour but de réaliser un lien inviolable assurant la même sécurité, mais à un coût sensiblement réduit. Selon l'invention, le lien comprend une bande en matière plastique et deux organes de fermeture l'un, de type mâle, disposé à l'une de ses extrémités, l'autre, de type femelle, à l'autre extrémité, munis de moyens d'enclenchement agencés pour permettre un enclenchement inamovible de l'organe mâle dans l'organe femelle. Dans ce lien :
■ l'organe femelle comporte un logement borgne défini par un fond et une paroi latérale,
■ l'organe mâle comporte un corps, et
■ les moyens d'enclenchement comprennent, un premier épaulement disposé dans le logement et un deuxième épaulement solidaire du corps et destiné à être engagé derrière le premier épaulement pour assurer ledit enclenchement.

Ce lien est caractérisé en ce qu'il comporte, en outre, un élément élastique reliant au moins l'un des épaulements à l'organe auquel il est attaché, la bande, les organes, les moyens d'enclenchement et l'élément élastique étant constitués d'une seule pièce en matériau homogène et souple. De la sorte, le lien peut être fabriqué en une seule opération, sans devoir rapporter de pièces, quelles soient en métal ou en plastique. De plus, comme le logement est borgne, il n'est pas possible de forcer l'organe mâle depuis l'arrière, en agissant sur l'élément élastique.

De manière avantageuse, l'élément élastique est formé de deux lames disposées à l'intérieur du logement. Les extrémités libres des deux lames forment le premier épaulement, alors que le deuxième épaulement est disposé dans le prolongement du corps et coopère avec les extrémités libres pour assurer un enclenchement indémontable des deux organes.

Afin de bloquer en rotation l'organe mâle ce dernier comprend, en outre, deux ailes disposées de part et d'autre de son corps et agencées pour prendre place entre les lames, empêchant ainsi tout mouvement relatif des organes mâle et femelle lorsqu'ils sont enclenchés.

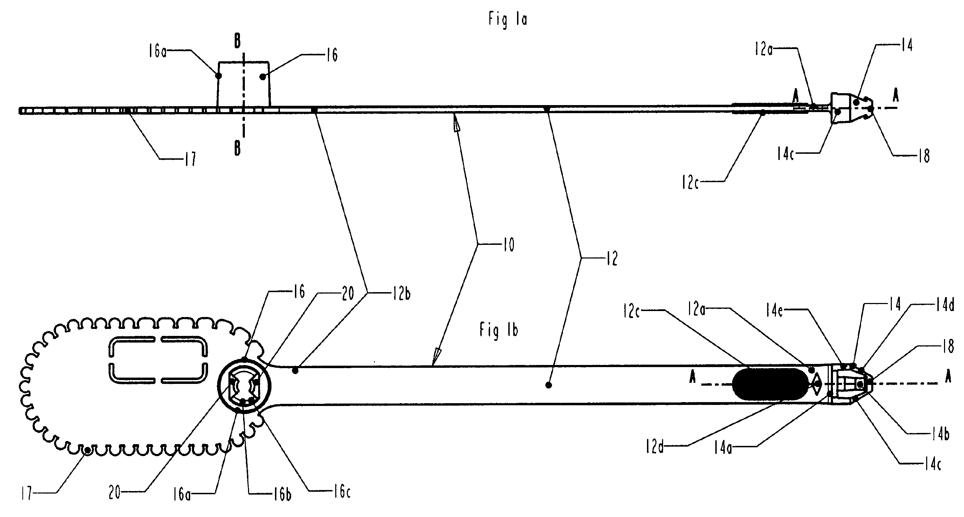

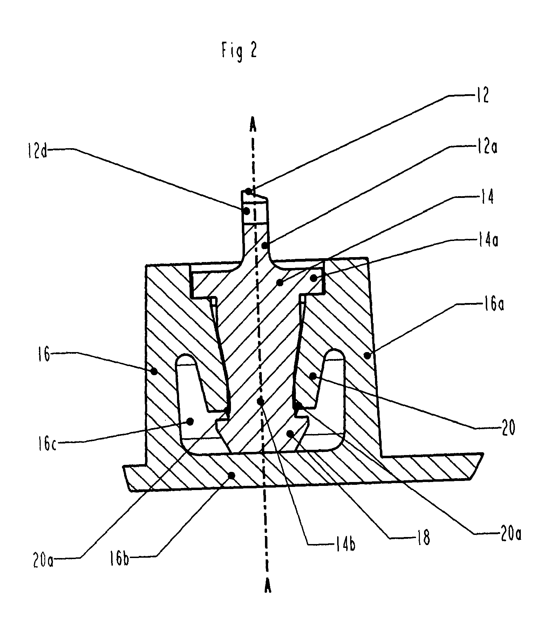

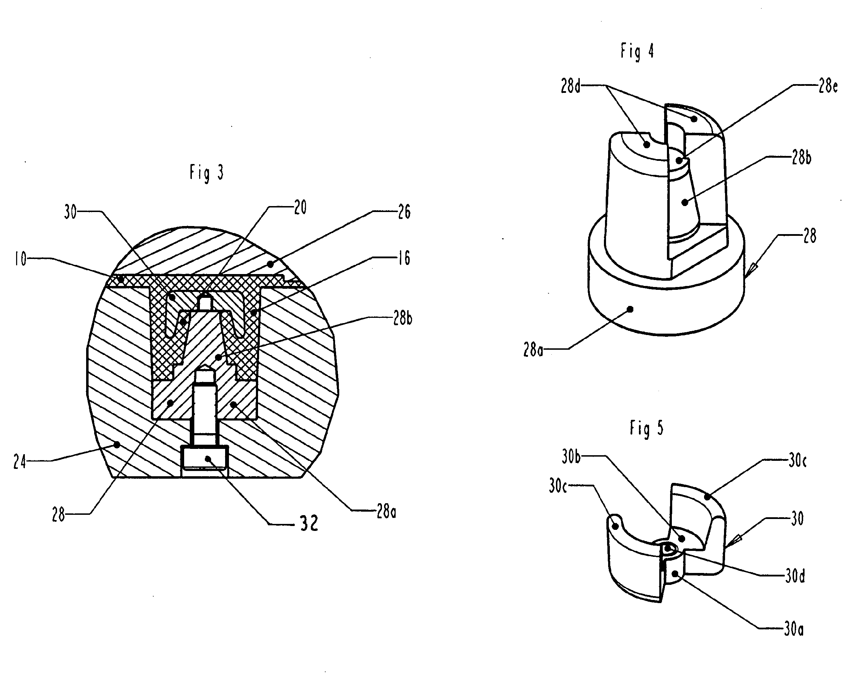

D'autres avantages et caractéristiques de l'invention ressortiront de la description qui va suivre, faite en regard du dessin annexé, dans lequel:
■ La figure 1 représente un lien selon l'invention, vu de profil en a et de dessus en b ;
■ La figure 2 est une vue en coupe des organes mâle et femelle assemblés ;
■ La figure 3 est une vue en coupe d'une partie de moule destinée à fabriquer le lien selon l'invention ; et
■ Les figures 4 et 5 montrent, en perspectives, des noyaux permettant de former l'organe femelle.

La figure 1 montre un lien 10 comportant une bande 12 et des organes de fermetures, l'un 14, de type mâle, disposé à l'une des extrémités 12a de la bande, l'autre 16 de type femelle, disposé à l'autre extrémité 12b.

La bande 12 porte, en outre, dans le prolongement de son extrémité 12b, une plaquette d'identification 17. L'extrémité 12a est munie d'une portion moletée 12c destinée à faciliter la manipulation du lien 10, et une découpe 12d en forme de losange et formant une amorce de rupture, comme cela sera expliqué plus loin.

L'organe mâle 14 est disposé dans le prolongement de la bande 12. Il comporte une base 14a cylindrique tronquée et attenante à l'extrémité 12a de la bande, et un corps 14b de forme sensiblement cylindrique d'axe AA, orienté dans le sens de la longueur de la bande 12 et disposé au centre des faces planes de la base 14a.

L'extrémité du corps 14b porte, solidaire par sa base, un épaulement en tronc de cône 18 débordant radialement du corps 14b. Deux ailes 14c s'étendent de part et d'autre du corps 14b. Elles sont chacune formées d'un secteur de tronc de cône 14d, prolongeant le tronc de cône de l'épaulement 18, prolongé d'un secteur cylindrique 14e de diamètre égal à la largeur de la bande 12. Les ailes 14c sont disposées symétriquement par rapport à un plan perpendiculaire à la bande 12 et passant par l'axe AA. Elles embrassent chacune un angle légèrement inférieur à 90°.

L'organe femelle 16 comporte une paroi 16a dont la surface extérieure est légèrement conique d'axe BB, perpendiculaire à la bande 12 et un fond 16b disposé dans le prolongement de cette bande. La paroi 16a et le fond 16b définissent ensemble un logement 16c borgne.

La paroi 16a porte, disposées dans le logement 16c, deux lames 20 (Fig 2) s'étendant vers l'axe BB et vers le fond 16b, et dont les extrémités 20a forment des épaulements dont la distance de l'un à l'autre est inférieure au diamètre de la base du tronc de cône constituant l'épaulement 18.

Les lames 20, vu de dessus, présentent une forme de trapèze dont la petite base est concave et dont l'angle au sommet est légèrement inférieur à 90°. De la sorte, vu de dessus et comme illustré sur la figure 1b, le logement 16c comprend donc une portion centrale circulaire et deux ailes disposées symétriquement en secteur d'anneau et embrassant un angle légèrement supérieur à 90°.

La partie supérieure du logement 16c est munie d'une creusure circulaire tronquée de même forme que la base 14a et dont les dimensions sont légèrement supérieures à celles de cette dernière, pour permettre son engagement.

Pour fermer le lien 10, il suffit de saisir la bande 12 par sa portion moletée 12c, ce qui évite tout glissement, même en présence d'un fluide, et de disposer l'organe mâle 14 en regard de l'organe femelle 16, en incurvant la bande 12 et en alignant les axes AA et BB. L'organe mâle 14 est ensuite introduit dans le logement 16c, en forçant les lames 20 qui se déforment élastiquement, laissant passé l'épaulement 18 derrière les épaulements 20a.

Dès l'instant où l'organe mâle 14 est enclenché dans l'organe femelle 16, il n'est plus possible de l'en extraire sans détruire le lien 10. En effet, à cause de l'orientation des lames 20, qui sont tournées vers le centre et le fond du logement 16c, toute traction exercée sur la bande 12 a pour effet de renforcer l'accrochement des épaulements 18 et 20a. Si la traction dépasse une valeur limite, typiquement de 200 N, la bande 12 se rompt alors au niveau de la découpe 12d. Une telle limite est suffisante pour permettre un enlèvement du lien sans outil tout en évitant une rupture accidentelle, par exemple par accrochage.

Il n'est pas non plus possible d'agir sur les lames 20, du fait que la base 14a obture le logement 16c de son côté ouvert.

Les essais effectués ont montré qu'un tel lien est avantageusement réalisé en polyuréthane, de dureté avantageusement choisie entre 60 et 70 Shore D. Il peut aussi être fabriqué avec d'autres matières plastiques, par exemple en polypropylène, en polyéthylène ou en ABS, le choix des caractéristiques de la matière étant défini par les exigences de souplesse de la bande 12 et de rigidité des organes mâle et femelle.

Dans le cas d'un lien d'identification de gibier, les règles relatives aux matériaux destinés au conditionnement de denrées alimentaires seront appliquées.

La fabrication de tels liens se fait par injection de la matière en fusion dans un moule 22 partiellement représenté sur la figure 3 et qui comprend deux plaques d'empreinte 24 et 26.

La plaque 24, inférieure, est munie de canaux d'injection, non visibles sur le dessin, et comporte une creusure définissant la face du lien munie de l'organe femelle 16, alors que la plaque 26 comprend une creusure définissant la face opposée. Aussi, lorsque les plaques 24 et 26 sont assemblées, elles définissent entre elles un logement relié à l'extérieur par les seuls canaux d'injection et dont le volume correspond à celui du lien 10.

Le moule 22 doit être, en outre, muni de deux noyaux 28 et 30, disposés dans la partie du logement destinée à former l'organe femelle 16, et représentés en perspective respectivement sur les figures 4 et 5

Le noyau 28 est disposé dans le fond de la creusure de la plaque 24 destinée à former l'organe femelle 16. Il comporte une base 28a en appui dans le fond de la creusure et une portion centrale 28b s'étendant de la base 28a en direction de la plaque 26, et de forme correspondant à la portion centrale de l'organe femelle.

Deux portions latérales 28d, sensiblement en forme de secteur cylindrique et destinées à engendrer les ailes du logement 16c, s'étendent de part et d'autre et en avant de la portion centrale 28b. Elles forment une creusure 28e de forme générale cylindrique, dont la fonction sera précisée plus loin.

Le noyau 28 est fixé dans la plaque 24 au moyen d'une vis 32 et positionné au moyen d'une goupille non visible au dessin.

Le noyau 30, représenté sur la figure 5, comprend une portion centrale comprenant une partie cylindrique 30a et deux secteurs de cercle 30b embrassant un angle légèrement inférieur à 90° et s'étendant radialement. Chacun des secteurs porte un bras 30c s'étendant axialement de la périphérie des secteurs 30b sur une hauteur sensiblement égale à la moitié de la hauteur de la portion centrale 28b.

Ces bras 30c sont configurés de manière à former l'espace compris entre les lames 20 et la face intérieure de la paroi 16a. La partie cylindrique 30a est dimensionnée de manière à pouvoir être engagée dans la creusure 28e, ce qui assure le positionnement du noyau 30 en référence au noyau 28. Le noyau 30 comporte, en outre, un trou taraudé 30d destiné à à assurer le retrait du noyau 30.

Pour effectuer le moulage du lien 10, les deux noyaux 28 et 30 sont placés dans la plaque 24, dans la partie de la creusure destinée à former l'organe femelle 16, le noyau 28 vissé au fond au moyen de la vis 32, les portions latérales 28d étant disposées perpendiculairement à l'orientation de la bande 12. Le noyau 30 est ensuite mis en place par dessus, en engageant la partie 30a dans la creusure 28e, les bras 30c étant ainsi orientés dans le sens de la bande 12, c'est à dire perpendiculairement aux portions latérales 28d.

Lorsque les noyaux 28 et 30 sont en place, la plaque 26 est alignées sur la plaque 24 et la matière plastique en fusion est injectée dans le moule comme sait le faire l'homme du métier. Après que la matière est solidifiée, la plaque 26, puis le lien 10 ainsi fabriqué sont alors retirés de la plaque 24. Le noyau 28 reste solidaire de la plaque 24, alors que le noyau 30 reste engagé dans le logement 16b lien 10, engagé dans le logement 16c. Pour le retirer, il suffit d'engager une vis dans le trou 30d, de tourner le noyau 30 d'un quart de tour, de telle sorte que les secteurs 30b et les bras 30c se trouvent décalés par rapport aux lames 20, puis de le sortir du logement 16c.

Un tel mode de faire est, bien sûr, adapté à la réalisation de prototypes ou à une production artisanale. Il est évident que, pour une production industrielle, le moule serait modifié de manière à ce que le noyau 28 soit déplacer vers l'extérieur du logement 16c et que les portions latérales 28d se trouvent axialement au-dessus des bras 30c, puis que le noyau 30 soit tourné de 90° et entraîné avec le noyau 28 hors du logement. De telles opérations sont bien connues de l'homme du métier. Elles ne seront donc pas décrites de manière plus détaillée.

De nombreuses variantes sont, bien sûr envisageables, sans pour autant sortir du cadre de l'invention. Il est ainsi possible de réaliser les épaulements 20a de manière à ce qu'ils soient rigidement attachés à la paroi 16a de l'organe femelle. Dans ce cas, l'élément élastique peut alors être constitué par l'organe mâle 14 fendu de la base 14a jusqu'à l'extrémité de l'épaulement 18. Cette solution est toutefois moins favorable, le risque de voir une saleté se glisser dans la fente de l'organe mâle étant plus grand qu'avec la solution décrite plus haut.

Dans une autre variante, l'organe mâle 14 peut aussi être disposé perpendiculairement à la bande 12. Une telle solution complique toutefois la structure du moule.

L'étiquette 17 est, elle aussi, susceptible de nombreuses variantes. Elle pourrait être associée à un transpondeur permettant d'identifier électroniquement l'objet ou la personne portant le lien 10, ou encore à des capteurs assurant la traçabilité de l'objet auquel le lien est attaché, par exemple en y inscrivant son histoire en mémoire, voire en y associant une sonde thermique permettant de contrôler une chaîne de froid.

La portion moletée est avantageusement configurée de manière asymétrique, pour faciliter l'engagement de l'organe mâle et rendre plus difficile l'arrachement.

Ainsi, grâce au fait que le lien selon l'invention est réalisé d'une seule pièce, en un matériau homogène et de faible de coût, il est possible de le fabriquer à des coûts sensiblement réduits, tout en garantissant son inviolabilité.

## Revendications

1. Lien (10) comprenant une bande (12) en matière plastique et des organes de fermeture l'un, de type mâle (14), disposé à l'une de ses extrémités (12a), l'autre, de type femelle (16), à l'autre extrémité, munis de moyens d'enclenchement agencés pour permettre un enclenchement inamovible de l'organe mâle (14) dans l'organe femelle (16), dans lequel :
■ l'organe femelle (16) comporte un logement borgne (16c) défini par un fond (16b) et une paroi latérale (16a),
■ l'organe mâle (14) comporte un corps (14b), et
■ les moyens d'enclenchement comprennent, un premier épaulement (20a) disposé dans le logement (16c) et un deuxième épaulement (18) solidaire du corps (14b) et destiné à être engagé derrière le premier épaulement (20a) pour assurer ledit enclenchement,
**caractérisé en ce qu'**il comporte, en outre, un élément élastique (20) associé à au moins l'un (20a) desdits épaulements et **en ce que** ladite bande (12), lesdits organes (14, 16), lesdits moyens d'enclenchement et l'élément élastique (20) sont constitués d'une seule pièce formée d'un matériau homogène.

2. Lien selon la revendication 1, **caractérisé en ce que** ledit élément élastique est formé de deux lames (20) disposées à l'intérieur dudit logement (16c) dont les extrémités libres forment ledit premier épaulement (20a).

3. Lien selon la revendication 2, **caractérisé en ce que** le deuxième épaulement (18) est disposé dans le prolongement dudit corps (14b).

4. Lien selon la revendication 3, **caractérisé en ce que** ledit organe mâle (14) comprend, en outre, deux ailes (14c) disposées de part et d'autre dudit corps (14b) et agencées pour prendre place entre lesdites lames (20) de manière à empêcher une rotation dudit organe mâle (14) dans l'organe femelle (16).

5. Lien selon la revendication 1, **caractérisé en ce que** la bande (12) porte, en outre, des moyens d'identification (17).

6. Lien selon la revendication 5, **caractérisé en ce que** lesdits moyens d'identification (17) sont réalisés d'une seule pièce avec la bande (12).
